# EUROPÄISCHE PATENTSCHRIFT

(11) **EP 3 274 412 B1**
(45) Veröffentlichungstag und Bekanntmachung des Hinweises auf die Patenterteilung: **21.08.2019**
(21) Anmeldenummer: 16716496.1
(22) Anmeldetag: 24.03.2016
(51) Int. Cl.: C09D 163/00, C21D 8/00, H01F 41/02

(54) **COIL UND ELEKTROBAND ODER -BLECH**
COIL AND ELECTRICAL STRIP OR SHEET
BOBINE ET BANDE OU TÔLE ÉLECTRIQUE

(30) Priorität: 24.03.2015 EP 15160680
(43) Veröffentlichungstag der Anmeldung: 31.01.2018
(73) Patentinhaber: voestalpine Stahl GmbH, 4020 Linz (AT)
(72) Erfinder: FLUCH, Ronald, 4020 Linz (AT); TIEFENTHALLER, Roman, 4840 Vöcklabruck (AT)
(74) Vertreter: Jell, Friedrich
(86) Internationale Anmeldenummer: PCT/EP2016/056687
(87) Internationale Veröffentlichungsnummer: WO 2016/151129

(56) Entgegenhaltungen:
- DE-T2- 69 611 009

## Beschreibung

### Technisches Gebiet

Die Erfindung betrifft ein Elektroband oder -blech mit wenigstens einer auf einer dessen Flachseiten vorgesehenen, heißhärtenden Backlackschicht, die eine Epoxydharzbasis, mindestens einen Härter und wenigstens einen Füllstoff aufweist.

### Stand der Technik

Als Beschichtung von Elektrobändern bzw. -blechen sind aus dem Stand der Technik (WO2014/089593A1) heißhärtende Schmelzklebelacke bzw. Backlacke bekannt.

Unter einem heißhärtenden Schmelzklebelack - auch als Backlack bezeichnet - wird im Stand der Technik, ein reaktives Klebstoffsystem mit Schmelzklebstoff verstanden. Solch ein beispielsweise aus der EP0008811A1 bekannter Schmelzklebelack kann beispielsweise eine Lösung eines heißhärtenden bzw. thermohärtbaren Schmelzklebstoffs darstellen. Nach dem Entfernen des Lösungsmittels kann dieser Schmelzklebstoff durch den sogenannten Backprozess, d.h. durch Wärmezufuhr, zunächst zum Verkleben und dann zum Aushärten gebracht werden.

Nachteilig zeigte sich jedoch bei Blechpaketen aus Elektrobändern bzw. -blechen mit heißhärtenden Backlackschichten auf Epoxydharzbasis eine reduzierte Standfestigkeit. So konnte nach dem Endvernetzen des Backlacks ein deutlich über die Verwendungsdauer abfallende Haftfestigkeit und elektrischer Isolationswiderstand festgestellt werden. Die Möglichkeit, diesen Nachteilen mit einer erhöhten Vernetzungsdichte in der ausgehärteten Backlackschicht entgegen zu steuern, wird jedoch durch die Lagerstabilität der Elektrobänder bzw. -bleche mit heißhärtenden Backlack beschränkt.

### Darstellung der Erfindung

Die Erfindung hat sich daher die Aufgabe gestellt, ausgehend vom eingangs geschilderten Stand der Technik, die Backlackschicht mit einer Epoxydharzbasis derart zu verändern, dass einerseits das Elektroband oder -blech mit der heißhärtenden und damit noch aushärtbaren Backlackschicht eine hohe Lagerstabilität und andererseits die Ware aus diesem Elektroband oder -blech mit endvernetzter Backlackschicht eine hohe Standfestigkeit aufweisen können.

Die Erfindung wird dadurch gelöst, dass ein Elektoband oder -blech gemäß Anspruch 1 bereit gestellt wird, in dem der Füllstoff der Backlackschicht ein Metallcarbonat, -sulfat, -sulfid, -silicat oder -phosphat oder eine beliebige Mischung mehrerer dieser aufweist.
Weist der Füllstoff der Backlackschicht ein Metallcarbonat, -sulfat, -sulfid, -silicat oder -phosphat oder eine beliebige Mischung mehrerer dieser auf, konnte überraschend festgestellt werden, dass damit die stoffschlüssige Backlackverbindung im endvernetzten Zustand in ihrer Standfestigkeit deutlich erhöht werden kann. Insbesondere konnte eine erhöhte Dauertemperaturfestigkeit festgestellt werden, was selbst nach einer vergleichsweise langen Betriebsdauer eine erhöhte Schälfestigkeit an der stoffschlüssig verbackenen Backlackverbindung beispielsweise eines Blechpakets garantieren kann.
Diesen Vorteilen ist gemeinsam, dass es an der Vernetzungsdichte der vernetzten Backlackschicht nicht zwingend einer Änderung bedarf, sodass erfindungsgemäß auch eine vergleichsweise hohe Lagerstabilität am, mit einem heißhärtenden und damit heißhärtbaren bzw. vernetzbaren also reaktiven Backlack beschichteten Elektroband oder -blech ermöglicht werden kann. Als besonders bevorzugt haben sich gegenüber den anderen Füllstoffen Metallcarbonat und Metallsulfat als Füllstoff herausgestellt. Metallcarbonat und Metallsulfat können gegenüber den anderen Füllstoffen nämlich zu Verbesserungen nicht nur in der Lagerstabilität des flüssigen Backlacks, sondern auch in der Festigkeit des ausgehärteten Backlacks führen. Dies gilt insbesondere für Calciumcarbonat als Metallcarbonat und Bariumsulfat als Metallsulfat. Außerdem können die erfindungsgemäßen Füllstoffe die Formstabilität eines gelagerten Coils aus dem erfindungsgemäßen Elektroblech mit einer noch vernetzbaren Backlackschicht bzw. Schmelzklebelackschicht verbessern. Die Füllstoffe können beispielsweise zur Erhöhung der Oberflächenrauigkeit der Backlackschicht beitragen und damit ein selbstständiges Abrollen des Elektrobands erschweren. Im Allgemeinen wird erwähnt, dass dies insbesondere von Vorteil sein kann, wenn beide Flachseiten des Elektrobands eine Backlackschicht aufweisen.

Weist die heißhärtende Backlackschicht 5 bis 25 Vol.-% oder 5 bis 20 Vol.-% Füllstoff auf, kann dies eine eventuelle Erhöhung der Schichtdicke bei einem drucklosen Heißhärten der Backlackschicht verhindern, was auf einen Auffederungseffekt während der Aufheizphase der Backlackschicht zurückgeführt werden kann. Die erfindungsgemäßen Füllstoffe reduzieren jedoch die Fließfähigkeit der Backlackschicht so weit, dass es bis zum Einsetzen der chemischen Reaktion zu keiner Auffederung und damit keiner erhöhten Schichtdicke an der Backlackschicht im vernetzten Zustand kommen kann. Hierbei kann sich bereits bevorzugt 7 bis 16 Vol.-% Füllstoff auszeichnen.

Eine vorteilhafte Zusammensetzung kann sich ergeben, wenn die heißhärtende Backlackschicht 6 bis 10 Vol.-% Härter und 74 bis 85 Vol.-%, beispielsweise als Rest, die Epoxydharz als Basis aufweist. Neben der Epoxydharzbasis als Rest können in der Backlackschicht auch eventuelle Verunreinigungen enthalten sein.

Für den Füllstoff kann sich als Metallcarbonat beispielsweise Calciumcarbonat (Ca-C03) auszeichnen. So kann Calciumcarbonat eine vergleichsweise hohe Oxidationsbeständigkeit aufweisen, was die Stabilität des Backlacks deutlich erhöhen kann. Zudem kann sich die Struktur von Calciumcarbonat im gehärteten Backlack bei der Steigerung der Festigkeit auszeichnen.

Zur weiteren Festigkeitssteigerung am gehärteten Backlack kann beitragen, wenn als Metallsulfat Bariumsulfat (BaS04) als Füllstoff verwendet wird.

Für den Füllstoff kann sich als Metallsulfid beispielsweise Zinksulfid (ZnS) auszeichnen. Als Metallsilicat kann sich für den Füllstoff beispielsweise Magnesiumsilicat (MgO3Si) oder Aluminiumsilicat auszeichnen. Zudem kann sich als Füllstoff Metallphosphat beispielsweise Zinkphosphat Zn3(P04)2 auszeichnen. Weiter kann sich für den Füllstoff als Mischung beispielsweise Lithopone auszeichnen.

Die Haftfestigkeit der vernetzten Backlackschicht kann weiter erhöht werden, wenn der Füllstoff eine mittlere Korngröße von 0,6 bis 3 µm aufweist.

Weist der Härter eine Dicyandiamidbasis auf, kann dies weiter zur Erhöhung der Lagerstabilität der Backlackschicht beitragen.

Um die Verarbeitung des Elektrobands bzw. -blechs zu erleichtern, kann die Backlackschicht mindestens zwei Härter mit unterschiedlicher Reaktivität mit der Epoxidharzbasis, beispielsweise bei Raumtemperatur und/oder beim Trocknungsvorgang der Backlackschicht - beispielsweise bei 180 bis 240 Grad Celsius, aufweisen. Beispielsweise kann damit über eine Vorreaktion eines der beiden Härter die Lagerstabilität und/oder auch die Viskosität der Backlackschicht eingestellt werden.

Hervoragende mechanische Eigenschaften sowie eine gute Klebrigkeit kann sichergestellt werden, indem die Epoxidharzbasis Bisphenol-A (2,2-Bis-(4-hydroxyphenyl)-propan) ist. Im Allgemeinen wird erwähnt, dass die Epoxidharzbasis auf Glycidylethern von mehrwertigen Phenolen basieren kann, wie dies Bisphenol-A beispielsweise darstellt.

Vorzugsweise weist das Elektroband oder -blech auf dessen beiden Flachseiten die heißhärtende Backlackschicht auf, um dieses gegenüber Umwelteinflüssen zu schützen bzw. damit dessen Weiterverarbeitung zu erleichtern.

Vorzugsweise kann das Elektroband oder -blech zu einem Coil aufgewickelt werden und in diesem aufgewickelten Zustand aufgrund der erfindungsgemäßen Füllstoffe eine hohe Formstabilität des Coils gewährleisten. Auch beispielsweise dann, wenn das Elektroband oder -blech auf dessen beiden Flachseiten die heißhärtende Backlackschicht aufweist.

Besonders auszeichnen kann sich die Erfindung, wenn Metallcarbonat, -sulfat, -sulfid, -silicat oder -phosphat oder eine beliebige Mischung mehrerer dieser als Füllstoff bei einem heißhärtenden Backlack mit einer Epoxydharzbasis und mit einem Härter zur Erhöhung der Formstabilität eines Coils aus einem aufgewickelten Elektroband oder -blech, das auf mindestens einer dessen Flachseiten mit dem Backlack beschichtet ist, verwendet wird.

Außerdem kann Metallcarbonat, -sulfat, -sulfid, -silicat oder -phosphat oder eine beliebige Mischung mehrerer dieser als Füllstoff bei einem heißhärtenden Backlack mit einer Epoxydharzbasis und mit einem Härter zur Erhöhung der Dauertemperaturbeständigkeit eines aus Elektroband oder -blech hergestellten Blechpakets verwendet werden, wobei das Elektroband oder -blech auf mindestens einer dessen Flachseiten mit dem Backlack beschichtet ist.

Diese erfindungsgemäßen technischen Effekte können bereits bei 5 bis 25 Vol.-% oder 5 bis 20 Vol.-% oder selbst bei 7 bis 16 Vol.-% Metallcarbonat, -sulfat, -sulfid, - silicat oder -phosphat oder eine beliebige Mischung mehrerer dieser möglich sein.

### Weg zur Ausführung der Erfindung

Im Folgenden wird die Erfindung beispielsweise anhand eines Ausführungsbeispiels näher erläutert.

Zum Nachweis der erzielten Effekte wurden Elektrobänder mit unterschiedlichen Zusammensetzungen an Backlack beschichtet und diese backlackbeschichteten Elektrobänder auf Lagerbeständigkeit und Schälfestigkeit nach 200 Betriebsstunden bei 200 Grad Celsius hin untersucht.
Die verschiedenen Backlackschichten sind in der Tabelle 1 angeführt.

**Tabelle 1: Übersicht zu den untersuchten Backlackschichten**

| Backlackschicht | Epoxidharzbasis | Füllstoff | Härter |
|---|---|---|---|
| 1 | Bisphenol-A | Kein Füllstoff | Dicyandiamid |
| 2 | Bisphenol-A | CaCO3 | Dicyandiamid |
| 3 | Bisphenol-A | BaSO4 | Dicyandiamid |

Alle getesteten Backlackschichten 1, 2 und 3 weisen eine Epoxydharzbasis und 6 bis 10 Vol.-% Härter auf, wobei die Backlackschichten 2 und 3 zum Unterschied zur ersten Backlackschicht je 5 bis 20 Vol.-% einen Füllstoff mit einer Korngröße von 0,6 bis 3 µm aufweisen. Vorzugsweise weisen die Backlackschichten 1, 2 und 3 je 74 bis 85 Vol.-% Epoxydharzbasis bzw. im Allgemeinen je als Rest eine Epoxydharzbasis auf.

Zudem ist vorstellbar, dass mehrere Härter bei den Backlackschichten verwendet werden. Vorzugsweise wird ein weiterer Härter zugegeben, der im Vergleich zum Härter Dicyandiamid bei Raumtemperatur und/oder beim Trocknungsvorgang der Backlackschicht beispielsweise bei 180 bis 240°C, reaktionsschneller ist - so kann durch Vor-Reagieren mit der Epoxydharzbasis beispielsweise die Viskosität der Backlackschicht einstellt werden. Dies kann vorteilhaft auch ein Ausquetschen der Backlachschicht beim Klebepaketieren der vom Blechband abgetrennten Blechteile verhindern. Hierfür sind beispielsweise kaltanhärtende Amine (z.B.: AEP n-Aminoethylpiperazin, cycloaliphatisches Polyamin) als zusätzliche Härter vorstellbar. Im Allgemeinen wird zudem erwähnt, dass es sich bei den erfindungsgemäßen Füllstoffen um inaktive oder aktive bzw. diesbezüglich funktionalisierte Füllstoffe handeln kann.

Im Allgemeinen wird erwähnt, dass die angegebenen Vol.-% auf die Gesamtmenge des Festkörpers der Backlackschicht bezogen sind - bzw. die erwähnten Vol.-% zusammen 100 Vol.-% auf die Gesamtmenge des Festkörpers ergeben.

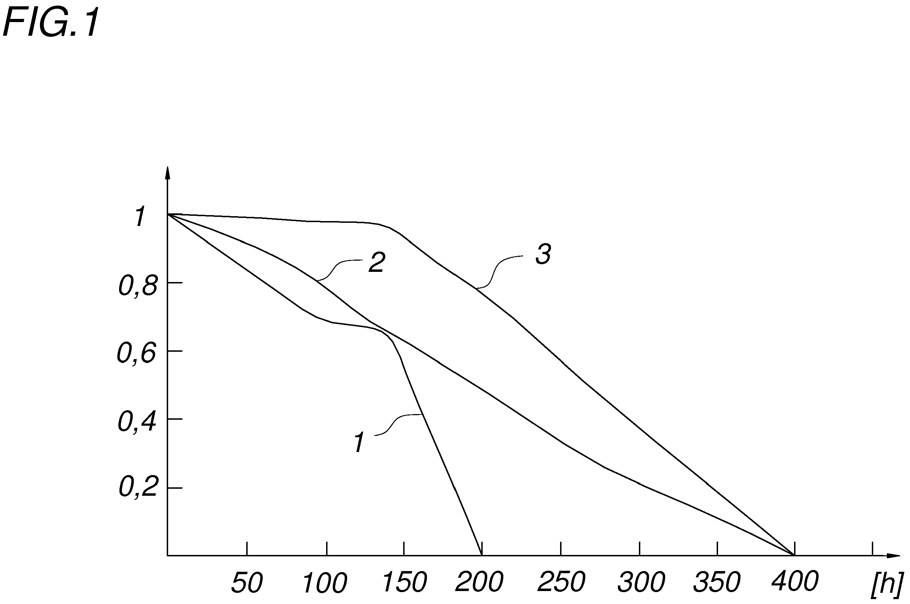

Wie in Fig. 1 zu erkennen, zeigen Elektrobänder mit den heißhärtenden bzw. heißhärtbaren Backlackschichten 1, 2 bzw. 3, die als Coil gelagert und anschließend zu einem Blechpaket unter Verbacken der Backlackschichten 1, 2 bzw. 3 weiterverarbeitet worden sind. Im Vergleich zum Elektroband mit der Backlackschicht 1 konnte bei den Elektrobändern mit den Backlackschichten 2 und 3 eine deutlich höhere Schälfestigkeit bei einer thermischen Alterung nach 200 Betriebsstunden unter 200 Grad Celsius festgestellt werden, was am normalisierten Verlauf der Schälfestigkeit in Fig. 1 erkannt werden kann.

Zudem zeigten Coils aus den Elektrobändern mit den heißhärtenden und damit noch aushärtbaren Backlackschichten 2 und 3 vom aufgehaspelten Zustand bis zur Weiterverarbeitung zu Blechpaketen eine hohe Formstabilität. Diese Formstabilität ist außerdem deutlich höher als jene vom Coil aus dem Elektroband mit der heißhärtenden und damit noch aushärtbaren Backlackschicht 1.

## Patentansprüche

1. Elektroband oder -blech mit wenigstens einer auf einer dessen Flachseiten vorgesehenen, heißhärtenden Schmelzklebelackschicht, nämlich Backlackschicht, die eine Epoxydharzbasis, mindestens einen Härter und wenigstens einen Füllstoff aufweist, **dadurch gekennzeichnet, dass** der Füllstoff der Backlackschicht ein Metallcarbonat, -sulfat, -sulfid, -silicat oder -phosphat oder eine beliebige Mischung mehrerer dieser aufweist.

2. Elektroband oder -blech nach Anspruch 1, **dadurch gekennzeichnet, dass** die heißhärtende Backlackschicht 5 bis 25 Vol.-% oder 5 bis 20 Vol.-% oder 7 bis 16 Vol.-%, Füllstoff aufweist.

3. Elektroband oder -blech nach Anspruch 2, **dadurch gekennzeichnet, dass** die heißhärtende Backlackschicht
6 bis 10 Vol.-% Härter und
74 bis 85 Vol.-% Epoxydharz als Basis
aufweist.

4. Elektroband oder -blech nach Anspruch 1, 2 oder 3, **dadurch gekennzeichnet, dass** das Metallcarbonat Calciumcarbonat (CaCO3) ist.

5. Elektroband oder -blech nach Anspruch 1, 2 oder 3, **dadurch gekennzeichnet, dass** das Metallsulfat Bariumsulfat (BaSO4) ist.

6. Elektroband oder -blech nach Anspruch 1, 2 oder 3, **dadurch gekennzeichnet, dass**
das Metallsulfid Zinksulfid (ZnS),
das Metallsilicat Magnesiumsilicat (MgO3Si) oder Aluminiumsilicat,
das Metallphosphat Zinkphosphat Zn3(PO4)2 oder
die Mischung Lithopone ist.

7. Elektroband oder -blech nach einem der Ansprüche 1 bis 6, **dadurch gekennzeichnet, dass** der Härter eine Dicyandiamidbasis aufweist.

8. Elektroband oder -blech nach einem der Ansprüche 1 bis 7, **dadurch gekennzeichnet, dass** die Backlackschicht mindestens zwei Härter mit unterschiedlichen Reaktivitäten mit der Epoxidharzbasis aufweist.

9. Elektroband oder -blech nach einem der Ansprüche 1 bis 8, **dadurch gekennzeichnet, dass** die Epoxidharzbasis Bisphenol-A ist.

10. Elektroband oder -blech nach einem der Ansprüche 1 bis 9, **dadurch gekennzeichnet, dass** das Elektroband oder -blech auf dessen beiden Flachseiten die heißhärtende Backlackschicht aufweist.

11. Coil mit einem aufgewickelten Elektroband oder -blech nach einem der Ansprüche 1 bis 10.

12. Verwendung von Metallcarbonat, -sulfat, -sulfid, -silicat oder -phosphat oder eine beliebige Mischung mehrerer dieser als Füllstoff bei einem heißhärtenden Schmelzklebelack, nämlich Backlack, mit einer Epoxydharzbasis und mit einem Härter zur Erhöhung der Formstabilität eines Coils aus einem aufgewickelten Elektroband oder -blech, das auf mindestens einer dessen Flachseiten mit dem Backlack beschichtet ist.

13. Verwendung von Metallcarbonat, -sulfat, -sulfid, -silicat oder -phosphat oder eine beliebige Mischung mehrerer dieser als Füllstoff bei einem heißhärtenden Schmelzklebelack, nämlich Backlack, mit einer Epoxydharzbasis und mit einem Härter zur Erhöhung der Dauertemperaturbeständigkeit eines aus Elektroband oder - blech hergestellten Blechpakets, wobei das Elektroband oder -blech auf mindestens einer dessen Flachseiten mit dem Backlack beschichtet ist.

14. Verwendung nach Anspruch 12 oder 13, **dadurch gekennzeichnet, dass** 5 bis 25 Vol.-% oder 5 bis 20 Vol.-% oder 7 bis 16 Vol.-% Metallcarbonat, -sulfat, -sulfid, -silicat oder -phosphat oder eine beliebige Mischung mehrerer dieser verwendet wird.

## Claims

1. An electrical strip or electrical sheet with at least one heat-hardening hotmelt varnish, namely a baked enamel layer, provided on its flat sides, which has an epoxy resin base, at least one hardener, and at least one filler, **characterized in that** the filler of the baked enamel layer contains a metal carbonate, sulfate, sulfide, silicate, or phosphate or any mix of a plurality of these.

2. The electrical strip or electrical sheet according to claim 1, **characterized in that** the heat-hardening baked enamel layer contains 5 to 25% by volume, 5 to 20% by volume, or 7 to 16% by volume of filler.

3. The electrical strip or electrical sheet according to claim 2, **characterized in that** the heat-hardening baked enamel layer contains
6 to 10% by volume of hardener and
74 to 85% by volume of epoxy resin as a base.

4. The electrical strip or electrical sheet according to claim 1, 2, or 3, **characterized in that** the metal carbonate is calcium carbonate (CaCO₃).

5. The electrical strip or electrical sheet according to claim 1, 2, or 3, **characterized in that** the metal sulfate is barium sulfate (BaSO₄).

6. The electrical strip or electrical sheet according to claim 1, 2, or 3, **characterized in that**
the metal sulfide is zinc sulfide (ZnS),
the metal silicate is magnesium silicate (MgO₃Si) or aluminum silicate,
the metal phosphate is zinc phosphate Zn₃(PO₄)₂, or
the mixture is lithopone.

7. The electrical strip or electrical sheet according to one of claims 1 through 6, **characterized in that** the hardener has a dicyandiamide base.

8. The electrical strip or electrical sheet according to one of claims 1 through 7, **characterized in that** the baked enamel layer has at least two hardeners that have different reactivities with the epoxy resin base.

9. The electrical strip or electrical sheet according to one of claims 1 through 8, **characterized in that** the epoxy resin base is bisphenol A.

10. The electrical strip or electrical sheet according to one of claims 1 through 9, **characterized in that** the electrical strip or electrical sheet has the heat-hardening baked enamel layer on both of its flat sides.

11. A coil with a wound electrical strip or electrical sheet according to one of claims 1 through 10.

12. A use of a metal carbonate, sulfate, sulfide, silicate, or phosphate or any mix of a plurality of these as a filler in a heat-hardening hotmelt varnish, namely a baked enamel layer, with an epoxy resin base and a hardener for increasing the dimensional stability of a coil composed of a wound electrical strip or electrical sheet that is coated with the baked enamel on at least one of its flat sides.

13. A use of a metal carbonate, sulfate, sulfide, silicate, or phosphate or any mix of a plurality of these as a filler in a heat-hardening hotmelt varnish, namely a baked enamel layer, with an epoxy resin base and a hardener for increasing the long-term temperature resistance of a laminated core made of electrical strip or electrical sheet, wherein the electrical strip or electrical sheet is coated with the baked enamel on at least one of its flat sides.

14. The use according to claim 12 or 13, **characterized in that** 5 to 25% by volume, 5 to 20% by volume, or 7 to 16% by volume of metal carbonate, sulfate, sulfide, silicate, or phosphate or any mix of a plurality of these is used.

## Revendications

1. Bande ou tôle électrique comportant sur une de ses faces planes au moins une couche de vernis sous forme de colle fusible thermodurcissable, à savoir une couche de vernis thermoadhésif, qui comprend une base de résine époxyde, au moins un durcisseur et au moins une charge, **caractérisée en ce que** la charge de la couche de vernis thermoadhésif contient un carbonate, sulfate, sulfure, silicate ou phosphate métallique ou un mélange quelconque de plusieurs de ces composés.

2. Bande ou tôle électrique selon la revendication 1, **caractérisée en ce que** la couche de vernis thermoadhésif thermodurcissable contient entre 5 et 25 % vol. ou entre 5 et 20 % vol. ou entre 7 et 16 % vol. de charge.

3. Bande ou tôle électrique selon la revendication 2, **caractérisée en ce que** la couche de vernis thermoadhésif thermodurcissable contient
entre 6 et 10 % vol. de durcisseur et
entre 74 et 85 % vol. de résine époxyde constituant la base.

4. Bande ou tôle électrique selon la revendication 1, 2 ou 3, **caractérisée en ce que** le carbonate métallique est du carbonate de calcium (CaCO₃).

5. Bande ou tôle électrique selon la revendication 1, 2 ou 3, **caractérisée en ce que** le sulfate métallique est du sulfate de baryum (BaSO₄).

6. Bande ou tôle électrique selon la revendication 1, 2 ou 3, **caractérisée en ce que**
le sulfure métallique est du sulfure de zinc (ZnS),
le silicate métallique est du silicate de magnésium (MgO₃Si) ou du silicate d'aluminium,
le phosphate métallique est du phosphate de zinc Zn₃(PO₄)₂ ou
le mélange est du lithopone.

7. Bande ou tôle électrique selon l'une des revendications 1 à 6, **caractérisée en ce que** le durcisseur est à base de dicyandiamide.

8. Bande ou tôle électrique selon l'une des revendications 1 à 7, **caractérisée en ce que** la couche de vernis thermoadhésif contient au moins deux durcisseurs ayant des réactivités différentes avec la base de résine époxyde.

9. Bande ou tôle électrique selon l'une des revendications 1 à 8, **caractérisée en ce que** la base de résine époxyde est du bisphénol A.

10. Bande ou tôle électrique selon l'une des revendications 1 à 9, **caractérisée en ce que** la bande ou la tôle électrique présente la couche de vernis thermoadhésif thermodurcissable sur ses deux faces planes.

11. Bobine sur laquelle une bande ou tôle électrique selon l'une des revendications 1 à 10 est enroulée.

12. Utilisation de carbonate, sulfate, sulfure, silicate ou phosphate métallique ou d'un mélange quelconque de plusieurs de ces composés dans une colle fusible thermodurcissable, à savoir un vernis thermoadhésif, contenant une base de résine époxyde et un durcisseur, pour accroître la stabilité de forme d'une bobine faite d'une tôle ou bande électrique enroulée, qui est enduite du vernis thermoadhésif sur au moins une de ses faces planes.

13. Utilisation de carbonate, sulfate, sulfure, silicate ou phosphate métallique ou d'un mélange quelconque de plusieurs de ces composés dans une colle fusible thermodurcissable, à savoir un vernis thermoadhésif, contenant une base de résine époxyde et un durcisseur, pour accroître la résistance thermique de longue durée d'un paquet de tôles formé de bande ou de tôle électrique, laquelle bande ou tôle électrique est enduite du vernis thermoadhésif sur au moins une de ses faces planes.

14. Utilisation selon la revendication 12 ou 13, **caractérisée en ce que** 5 à 25 % vol. ou 5 à 20 % vol. ou 7 à 16 % vol. de carbonate, sulfate, sulfure, silicate ou phosphate métallique ou d'un mélange quelconque de plusieurs de ces composés sont utilisés.
